# EUROPÄISCHE PATENTANMELDUNG

(11) **EP 0 949 119 A1**
(43) Veröffentlichungstag der Anmeldung: **13.10.1999**
(21) Anmeldenummer: 99101682.5
(22) Anmeldetag: 08.02.1999
(51) Int. Cl.: B60R 7/02

(54) **Vorrichtung zur Sicherung von Ladegut in einem Lade-oder Gepäckraum eines Kraftfahrzeugs**

(30) Priorität: 09.04.1998 DE 19816019
(71) Anmelder: Volkswagen Aktiengesellschaft, 38436 Wolfsburg (DE)
(72) Erfinder: Thill, Albert, Dipl.-Ing., 38554 Weyhausen (DE)

(57) **Zusammenfassung**

Die Erfindung betrifft eine Vorrichtung zur Sicherung von Ladegut in einem Lade- oder Gepäckraum eines Kraftfahrzeugs, mit mindestens einem Sicherungsgurt, der an einem Ende mit einer Aufrollvorrichtung verbunden ist und einen Verriegelungsteil eines Gurtschlosses trägt, der sich nach Herumlegen des Sicherungsgurts um das Ladegut oder einen Teil des Ladeguts mit einem im Abstand von der Aufrollvorrichtung angeordneten Gurtschloß-Schloßteil in Verriegelungseingriff bringen läßt. Um mit handelsüblichen Sicherungsgurten eine einhändige Bedienung zu ermöglichen und mitgeführtes Ladegut sowohl gegen Horizontal- und Vertikalbewegungen sichern zu können, läßt sich gemäß einer ersten Variante der Erfindung der Verriegelungsteil (20) unter Abziehen des Sicherungsgurts (18), der gemäß einer zweiten Variante der Erfindung mindestens zwei Verriegelungsteile (20, 22; 66, 68, 70) trägt, von der Aufrollvorrichtung (16) zu einem von mehreren, im Abstand voneinander ortsfest im Laderaum angeordneten Schloßteilen (24, 26, 28, 30, 32; 52, 54; 76, 78, 80, 82) bewegen und damit in Verriegelungseingriff bringen.

## Beschreibung

Die Erfindung betrifft eine Vorrichtung zur Sicherung von Ladegut in einem Lade- oder Gepäckraum eines Kraftfahrzeugs, mit mindestens einem Sicherungsgurt, der an einem Ende mit einer Aufrollvorrichtung verbunden ist und einen Verriegelungsteil eines Gurtschlosses trägt, der sich nach Herumlegen des Sicherungsgurts um das Ladegut oder einen Teil des Ladeguts mit einem im Abstand von der Aufrollvorrichtung angeordneten Gurtschloß-Schloßteil in Verriegelungseingriff bringen läßt.

Da sich in der Vergangenheit gezeigt hat, daß bei Unfällen und insbesondere bei Frontalzusammenstößen von Personenkraftwagen mit einem hinter der Rückenlehne ihrer Rücksitzbank angeordneten Lade- oder Gepäckraum schwere Verletzungen von Fahrzeuginsassen auftreten können, wenn nicht oder nur unzureichend gesichertes Ladegut im Lade- oder Gepäckraum durch den Aufprall nach vorne beschleunigt wird und die Rückenlehne durchbricht oder über diese hinweg in den Fahrgastraum eindringt, schreibt die Deutsche Industrienorm DIN 75410-2 für Pkw-Kombi und Mehrzweck-Pkw bereits Ladegut-Sicherungsvorrichtungen vor, die derartige Unfallfolgen verhindern sollen.

Diese Vorrichtungen können beispielsweise von Sicherungsnetzen gebildet werden, wie in der DE 195 20 584 A1 offenbart, oder Sicherungsgurte umfassen, wie beispielsweise in der EP-A-0 670 244 A1 offenbart, die mehrere Ladegut-Sicherungsvorrichtungen der eingangs genannten Art beschreibt. Die unter Bezugnahme auf die Figuren 1 bis 5 dieser Druckschrift beschriebenen Sicherungsgurte sind jeweils zweiteilig ausgebildet, wobei der eine Teil an einem Ende mit einer Aufrollvorrichtung verbunden ist, während der andere Teil mit einem Ende am Boden des Lade- oder Gepäckraums befestigt ist. Die freien Enden der beiden Gurtteile tragen einen Schloßteil bzw. einen Verriegelungsteil eines Gurtschlosses, die sich nach dem Herumlegen des einen Gurtteils um ein im Laderaum mitgeführtes Gepäckstück miteinander in Verriegelungseingriff bringen lassen. Dazu sind jedoch zwei Hände erforderlich, da der eine Gurtteil über das Gepäckstück gelegt und der andere Gurtteil von der Aufrollvorrichtung abgezogen werden muß, um den Schloßteil und den Verriegelungsteil miteinander in Eingriff zu bringen. Bei dem unter Bezugnahme auf Fig. 6 dieser Druckschrift beschriebenen Sicherungsgurt ist wie bei herkömmlichen Sicherheitsgurten das eine Ende auf einer Aufrollvorrichtung aufgerollt, das andere Ende im Abstand von der Aufrollvorrichtung verankert, und auf dem Sicherungsgurt ein verschiebbarer Verriegelungsteil vorgesehen, der unter Abziehen des Sicherungsgurts von der Aufrollvorrichtung und unter Herumlegen um das Gepäckstück mit einem im Abstand von der Aufrollvorrichtung und dem Verankerungspunkt auf der gegenüberliegenden Seite des Gepäckraums angeordneten Schloßteil in Eingriff gebracht werden kann. Auch bei dieser Anordnung sind zwei Hände erforderlich, um mit einer Hand das Gepäckstück festzuhalten und mit der anderen Hand den Gurt am Verriegelungsteil über das Gepäckstück zu ziehen. Außerdem kann sich das Gepäckstück bei sämtlichen beschriebenen Anordnungen in einer scharfen Kurve quer zur Fahrtrichtung verschieben und unter dem Sicherungsgurt hervorrutschen, wodurch dieser seine Wirksamkeit verliert. Darüberhinaus hängen die Sicherungsgurte in unbenutztem Zustand im Laderaum herum, so daß die Verriegelungsteile beim Durchfahren scharfer Kurven gegen die Laderaumwände anschlagen und unerwünschte Geräusche verursachen können. Auch lassen sich mit der bekannten Vorrichtung mehrere Gepäckstücke nicht ausreichend sicher befestigen.

Aus der DE 196 39 610 A1 ist weiter eine Beladungsrückhaltevorrichtung für Fahrzeuge gemäß dem Oberbegriff des Patentanspruchs 1 bekannt, bei welcher auf der Rückseite der Rückenlehne ein Gurtsystem angebracht ist, das einen einziehbaren Spanngurt umfaßt. Dessen eines Ende ist mit einem Verschlußteil verbindbar, während sein anderes Ende mit der Innenseite eines Gurtwicklers verbunden ist, der einen Sensor zur Ermittlung der länge des herausgezogenen Spanngurts aufweist. Der Spanngurt dieser Vorrichtung läßt sich zwar einhändig bedienen, eignet sich jedoch ebenfalls nur schlecht zur Befestigung mehrerer Gepäckstücke und kann auch nicht deren seitliches Verrutschen bei schnellen Kurvenfahrten verhindern.

Ausgehend hiervon liegt der Erfindung die Aufgabe zugrunde, eine Vorrichtung der eingangs genannten Art dahingehend zu verbessern, daß sie sich gut mit einer Hand bedienen läßt, eine Sicherung von mehreren Gepäckstücken neben- und/oder übereinander ermöglicht und auch so ausgebildet und angeordnet werden kann, daß die Gepäckstücke gleichzeitig sowohl gegen Bewegungen parallel zum Boden des Gepäckraums in Fahrtrichtung und in seitlicher Richtung als auch gegen Bewegungen senkrecht dazu gesichert werden können.

Diese Aufgabe wird gemäß einer ersten Variante der Erfindung dadurch gelöst, daß sich der an einem freien Ende des Sicherungsgurts befestigte Verriegelungsteil unter Abziehen des Sicherungsgurts von der Aufrollvorrichtung zu einem von mehreren, im Abstand voneinander ortsfest im Lade- oder Gepäckraum angeordneten Schloßteilen bewegen und damit in Verriegelungseingriff bringen läßt. Mit den erfindungsgemäßen Maßnahmen kann der Verriegelungsteil mit einer Hand ergriffen werden und entlang eines gewünschten Pfades um ein oder mehrere Gepäckstücke herum oder darüber weg hinweg geführt werden, bevor er mit demjenigen der Schloßteile in Eingriff gebracht wird, das sich an der zur Sicherung des Gepäckstücks oder der Gepäckstücke am besten geeigneten Stelle befindet.

Die Begriffe Verriegelungsteil und Schloßteil bezeichnen die beiden Teile eines Gurtschlosses, wobei entweder der Schloßteil als Schloßzunge ausgebildet und dementsprechend der Verriegelungsteil mit einer Aufnahmeöffnung, einem Rastmechanismus und einer Entriegelungstaste versehen sein kann, oder umgekehrt der Schloßteil die Aufnahmeöffnung, den Rastmechanismus und die Entriegelungstaste aufweisen kann, während der Verriegelungsteil dann von einer Schloßzunge gebildet wird. Während die Schloßzunge gewöhnlich leichter ist und dadurch die Handhabung des Sicherungsgurts erleichtert, wenn sie am Sicherungsgurt angebracht ist, ist ein einhändiges Öffnen des Gurtschlosses unter gleichzeitigem Festhalten des Sicherungsgurts einfacher, wenn dieser den mit der Aufnahmeöffnung, dem Rastmechanismus und der Entriegelungstaste versehenen Teil des Gurtschlosses trägt.

Um das Herumhängen von unbenutzten Sicherungsgurten im Lade- oder Gepäckraum zu verhindern, sieht eine bevorzugte Ausgestaltung der Erfindung vor, daß in unbenutztem Zustand im wesentlichen der gesamte Sicherungsgurt auf der Aufrollvorrichtung aufgerollt ist, wobei der Verriegelungsteil zweckmäßig durch eine von der Aufrollvorrichtung ausgeübte Zugkraft in eine Griffmulde gezogen wird, die das Ergreifen des Verriegelungsteils erleichtert. Die Griffmulde ist vorzugsweise in einer Abdeckung oder Verkleidung ausgebildet, die eine zur Unterbringung der Aufrollvorrichtung im Boden oder in einer Wand des Gepäckraums ausgesparte Ausnehmung zum Gepäckraum hin verdeckt und zweckmäßig eine schlitzförmige Durchtrittsöffnung für den Sicherungsgurt aufweist.

Um zum Beispiel beim Durchfahren scharfer Kurven eine seitliche Verschiebung eines vom Sicherungsgurt gehaltenen Gepäckstücks im Lade- oder Gepäckraum zu verhindern, sieht eine weitere bevorzugte Ausgestaltung der Erfindung vor, daß die Aufrollvorrichtung an einer Wand des Lade- oder Gepäckraums angebracht ist, und daß der Schloßteil im Abstand von der Aufrollvorrichtung an derselben oder einer benachbarten Wand des Lade- oder Gepäckraums angebracht ist, wobei eine Drehachse der Aufrollvorrichtung im wesentlichen senkrecht zu einem Boden des Lade- oder Gepäckraums ausgerichtet ist, so daß sich der Sicherungsgurt entlang von Seitenflächen des Gepäckstücks um dieses herumlegen läßt. Vorzugsweise wird die Heckwand des Lade- oder Gepäckraums zur Anbringung der Aufrollvorrichtung und eines der Schloßteile benutzt, jedoch ist auch eine Anbringung der Aufrollvorrichtung an den Seitenwänden oder an einer den Lade-oder Gepäckraum in Fahrtrichtung begrenzenden Rückenlehne eines Rücksitzes oder einer Rücksitzbank möglich, während die Schloßteile zweckmäßig entlang der Wände verteilt angeordnet sind.

Während es zur Sicherung von mehreren im Lade- oder Gepäckraum verteilt angeordneten Gepäckstücken und zur gleichzeitigen Sicherung von Gepäckstücken gegen Horizontal- und Vertikalbewegungen grundsätzlich möglich ist, mindestens zwei Aufrollvorrichtungen für jeweils einen Sicherungsgurt vorzusehen, die zweckmäßig entweder in gegenüberliegenden Ecken des Gepäckraums, an einer Heck- oder Seitenwand oder an einer den Gepäckraum in Fahrtrichtung begrenzenden Rückenlehne eines Rücksitzes oder einer Rücksitzbank im Abstand voneinander angebracht sind, sieht eine zweite Variante oder besonders bevorzugte Ausgestaltung der Erfindung vor, daß der Sicherungsgurt mindestens zwei und vorzugsweise drei oder vier Verriegelungsteile trägt, die mindestens teilweise entlang des Sicherungsgurts verschiebbar sind. Die Verriegelungsteile lassen sich jeweils wahlweise mit einem der im Abstand von der Aufrollvorrichtung im Laderaum angeordneten ortsfesten Schloßteile in Verriegelungseingriff bringen. Dabei wird mit einer Hand zuerst einer der Verriegelungsteile ergriffen und der Sicherungsgurt durch Zug am Verriegelungsteil teilweise von der Aufrollvorrichtung abgezogen und ganz oder teilweise um das Gepäckstück oder die Gepäckstücke herumgelegt. Nach einer Verriegelung dieses Teils in einem ortsfesten Schloßteil können dann nacheinander eines oder mehrere der anderen Verriegelungsteile ebenfalls jeweils mit einer Hand ergriffen, über das Gepäckstück oder die Gepäckstücke gezogen und in anderen Schloßteilen eingerastet werden. Dadurch lassen sich mit einem einzigen Sicherungsgurt ein oder mehrere Gepäckstücke gleichzeitig sowohl gegen Verschiebungen parallel und senkrecht zum Boden des Lade- oder Gepäckraums sichern.

Durch die Mehrzahl von Schloßteilen wird dabei für jede Anordnung von Gepäckstücken im Lade- oder Gepäckraum eine Vielzahl von Möglichkeiten eröffnet, wie der Sicherungsgurt gespannt werden kann.

Im folgenden wird die Erfindung anhand einiger in der Zeichnung dargestellter Ausführungsbeispiele näher erläutert. Es zeigen:
Die Figuren 1 bis 4: schematische Ansichten eines Lade- oder Gepäckraums eines Personenkraftwagens mit einem Sicherungsgurt bei Betrachtung von oben;
Fig. 5: eine schematische Ansicht eines Lade- oder Gepäckraums eines Personenkraftwagens mit einem abgewandelten Sicherungsgurt bei Betrachtung von oben;
Fig. 6: eine schematische Ansicht eines Lade- oder Gepäckraums eines Personenkraftwagens mit zwei Sicherungsgurten bei Betrachtung von oben;

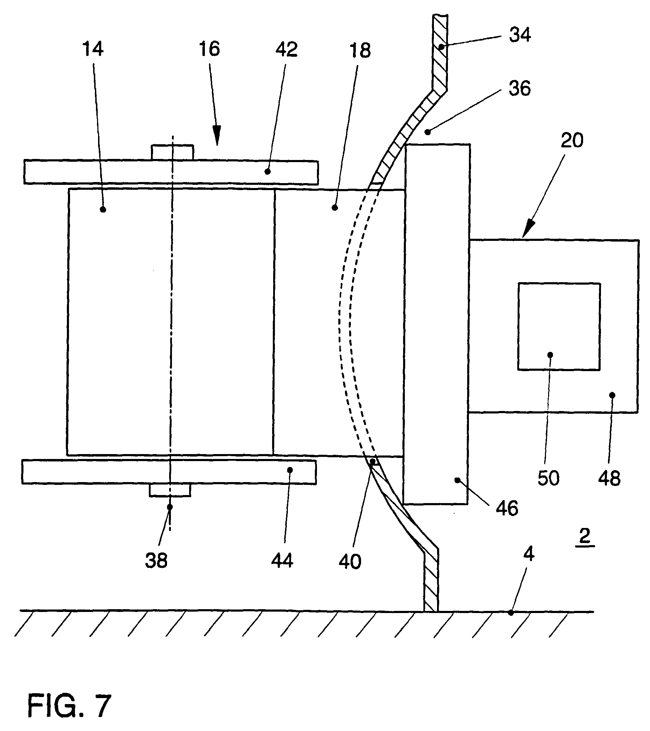

Fig. 7: eine teilweise geschnittene Seitenansicht einer hinter einer Seitenwandverkleidung des Lade- oder Gepäckraums angeordneten Sicherungsgurt-Aufrollvorrichtung.

Der in den Figuren dargestellte Personenkraftwagen weist einen Gepäckraum 2 mit einem ebenen horizontalen Boden 4 auf, der quer zur Fahrtrichtung durch zwei gegenüberliegende Seitenwände 6, 8, entgegen der Fahrtrichtung durch eine Heckwand 10 und in Fahrtrichtung durch die schräge Rückenlehne 12 einer Rücksitzbank des Personenkraftwagens begrenzt wird. Über der Heckwand 10 befindet sich eine klappbare Hecktüre (nicht dargestellt), durch die der Lade- oder Gepäckraum 2 zugänglich ist.

Um zu verhindern, daß sich bei einer scharfen Bremsung oder einem Aufprall des Personenkraftwagens im Lade- oder Gepäckraum 2 mitgeführte Gepäckstücke oder andere Gegenstände infolge ihrer Trägheit nach vorne bewegen und die Rückenlehne 12 durchbrechen oder über diese hinweg in den Fahrgastraum eindringen, weist der Personenkraftwagen im Lade- oder Gepäckraum 2 ein Gurtsystem auf, mit denen sich die mitgeführten Gegenstände sicher verzurren lassen.

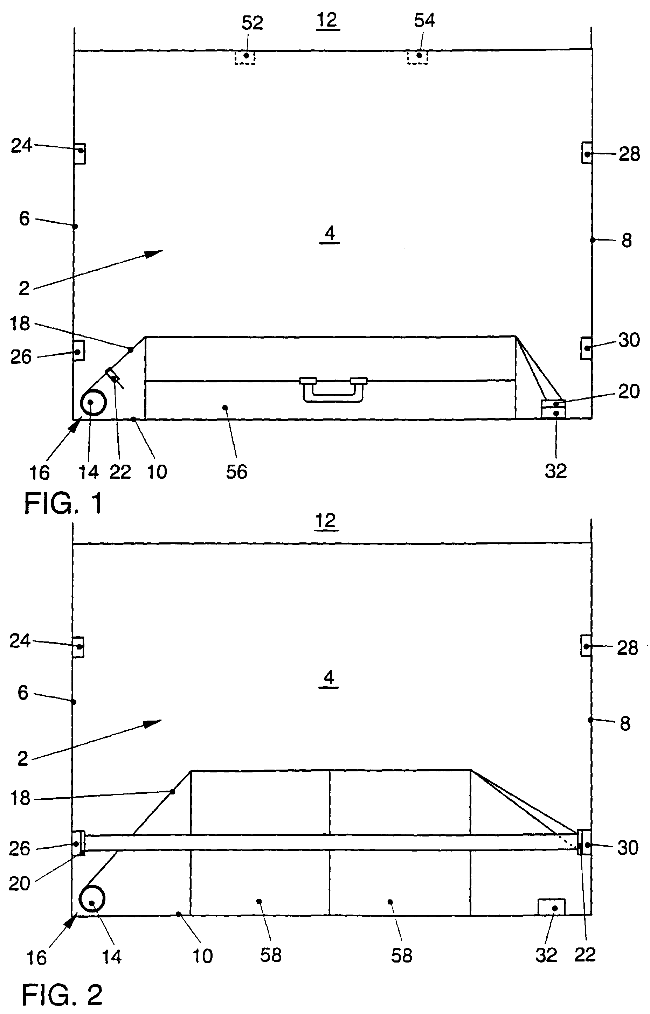

Bei den Ausführungsbeispielen der Figuren 1 bis 4 umfaßt das Gurtsystem einen auf einer Aufwickelrolle 14 eines Gurtaufrollers 16 aufgewickelten Sicherungsgurt 18. Der Gurtaufroller 16 weist einen Sperrmechanismus (nicht dargestellt) auf, der bei einer ruckartigen Zugbelastung im Sicherungsgurt 18 blockiert und eine Drehung der Aufwickelrolle 14 verhindert. Auf dem Sicherungsgurt 18 sind zwei Schloßzungen 20, 22 eines Gurtschlosses angebracht, die sich mit wahlweise mit einem von insgesamt fünf zugehörigen Gurtschloß-Schloßteilen 24, 26, 28, 30, 32 an den Seitenwänden 6 ,8 und an der Heckwand 10 des Lade- oder Gepäckraums 2 in Rast- oder Verriegelungseingriff bringen und durch Druck auf eine Entriegelungstaste (nicht dargestellt) des Schloßteils 24, 26, 28, 30, 32 wieder lösen lassen. Der Sichetungsgurt 18, der Gurtaufroller 16 mit der Aufwickelrolle 18 und dem Sperrmechanismus, die Schloßzungen 20, 22 und die Schloßteile 24, 26, 28, 30, 32 mit den Entriegelungstasten sind sämtlich von derjenigen Art, wie sie bei gebräuchlichen Dreipunkt-Automatiksicherheitsgurten von Personenkraftfahrzeugen üblicherweise verwendet werden, und werden daher nicht näher beschrieben.

Von den beiden Schloßzungen 20, 22 ist die erste Schloßzunge 20 am freien Ende des Sicherungsgurts 18 befestigt, während die zweite Schloßzunge 22 im wesentlichen zwischen dem Gurtaufroller 16 und der ersten Schloßzunge 20 entlang des Sicherungsgurts 18 verschiebbar ist. Bei aufgewickeltem Sicherungsgurt 18 befinden sich beide Schloßzungen 20, 22 in der Nähe des Gurtaufrollers 16, der in der Nähe von einer der hinteren Ecken des Lade- oder Gepäckraums 2 angeordnet ist.

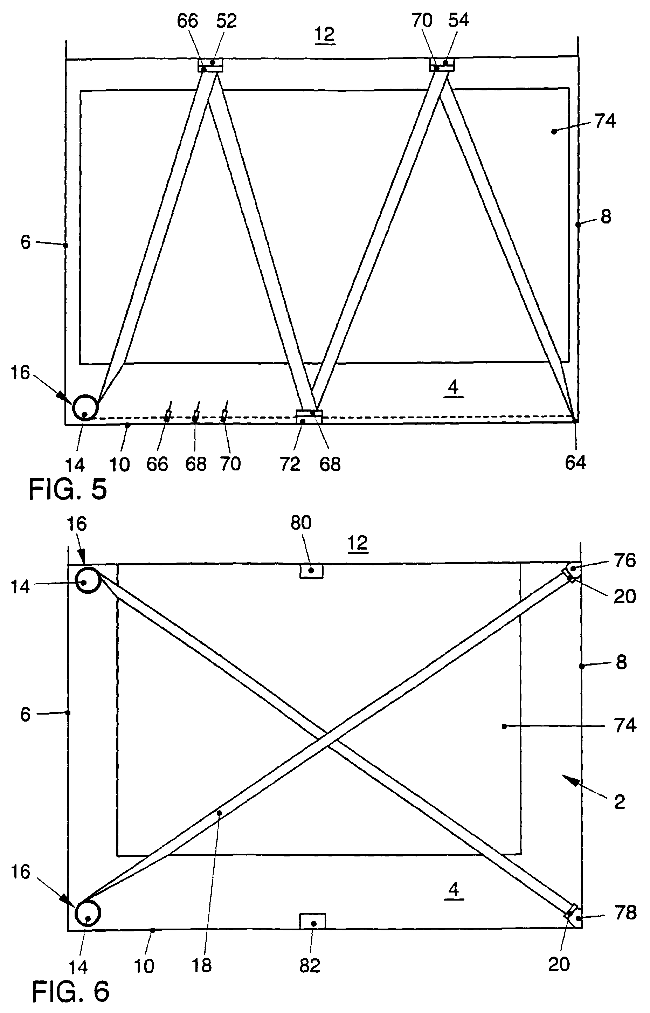

Wie am besten in Fig. 6 dargestellt, ist der Gurtaufroller 16 dort hinter einer Verkleidung 34 der Seiten- oder Heckwand 6 bzw. 10 des Lade- oder Gepäckraums 2 über dessen Boden 4 angebracht. Vor dem Gurtaufroller 16 ist die Verkleidung 34 mit einer Griffmulde 36 versehen, in welche die beiden Schloßzungen 20, 22 gezogen werden, wenn der nicht benutzte Sicherungsgurt 18 ganz auf der Aufwickelrolle 14 aufgewickelt ist. Die Aufwickelrolle 14 ist um eine Drehachse 38 drehbar, die zum Boden 4 des Lade- oder Gepäckraums 2 senkrecht ist, so daß der Sicherungsgurt 18 die Aufwickelrolle 14 in senkrechter Ausrichtung verläßt. In der Griffmulde 36 ist die Verkleidung 34 mit einer vertikalen schlitzförmigen Durchtrittsöffnung 40 für den Sicherungsgurt 18 versehen, die sicherstellt, daß dieser von einer Aufwickelautomatik (nicht dargestellt) der Aufwickelrolle 14 ohne Verdrehung und in der richtigen axialen Position zwischen zwei stirnseitigen Flanschen 42, 44 der Aufwickelrolle 14 aufgewickelt wird.

Bei aufgewickeltem Sicherungsgurt 18 schlagen beide Schloßzungen 20, 22 mit dem oberen und unteren Rand ihres aus Kunststoff bestehenden hinteren Griffteils 46 in der Griffmulde 36 gegen die Verkleidung 34 an, so daß sich dazwischen die Griffteile 46 zum Abziehen des Sicherungsgurts 14 von der Aufwickelrolle 14 leicht ergreifen lassen. Eine über den Griffteil 46 überstehende und teilweise in den Griffteil 46 eingebettete Metallplatte 48 ist so ausgebildet, daß sie sich zum Verrasten mit einem der Schloßteile 24, 26, 28, 30, 32 in eine Aufnahmeöffnung desselben einführen läßt. In verrastetem Zustand wird die Schloßzunge 20, 22 durch ein Sperrglied des Schloßteils 24, 26, 28, 30, 32 gehalten, das eine in der Metallplatte 48 ausgesparte Öffnung 50 durchsetzt und durch Druck auf die Entriegelungstaste entgegen der Kraft einer Feder aus seiner Sperrstellung herausbewegt werden kann.

Die als Zurrpunkte dienenden Gurtschloß-Schloßteile 24, 26, 28, 30, 32 sind entlang der Seitenwände 6, 8 und der Heckwand 10 des Lade- oder Gepäckraums 2 verteilt, wobei die dargestellte Anordnung mit jeweils zwei im Abstand voneinander an den Seitenwänden 6, 8 angebrachten Schloßteilen 24, 26; 28, 30 und einem Schloßteil 32 an der Heckwand 10 in der Nähe der zum Gurtaufroller 16 entgegengesetzten hinteren Ecke nur zur Veranschaulichung dient und beliebig abgewandelt werden kann. Alternativ oder zusätzlich können Schloßteile 52, 54 im Bereich der Rückenlehne 12 der Rücksitzbank vorgesehen sein, wie in Fig. 1 in unterbrochenen Linien dargestellt, wobei diese Schloßteile 52, 54 ggf. auch vom Schloßteil bzw. von den Schloßteilen eines oder mehrerer unbenutzter Dreipunkt-Sicherheitsgurte der Rücksitzbank gebildet werden können, die beispielsweise mit Schlaufen versehen sind, so daß sie sich wahlweise unter der Rückenlehne 12 hindurch nach hinten in den Lade- oder Gepäckraum 2 oder nach vorne in die Ecke zwischen dem Sitzteil und der Rückenlehne 12 der Rücksitzbank bewegen lassen. Die anderen Schloßteile 24, 26, 28, 30, 32 sind ortsfest im Lade- oder Gepäckraum 2 angebracht, wobei "ortsfest" bedeutet, daß die Aufnahmeöffnung des Schloßteils 24, 26, 28, 30, 32 stets in Richtung des Lade- oder Gepäckraums 2 weist, und daß sich die Schloßteile 24, 26, 28, 30, 32 nicht verschieben, wenn eine der Schloßzungen 20, 22 in die Aufnahmeöffnung gedrückt wird, so daß es nicht erforderlich ist, das Schloßteil 24, 26, 28, 30, 32 dabei festzuhalten. Jedoch ist es im Unterschied zu den dargestellten Ausführungsbeispielen grundsätzlich möglich, die Schloßteile 24, 26, 28, 30, 32 so anzubringen, daß sie um eine Längsmittelachse der Aufnahmeöffnung drehbar oder schwenkbar sind, so daß sich die Metallplatte 48 der Schloßzungen 20, 22 je nach Ausrichtung des benachbarten Gurtteils horizontal oder vertikal in die Aufnahmeöffnung einführen läßt.

Wie in den Figuren 1 bis 4 dargestellt, können im Gepäckraum mitgeführte Gegenstände je nach Größe, Anzahl und Ausbildung in vielerlei Weise mit dem Sicherungsgurt 18 gesichert werden.

In Fig. 1 ist ein niedriger Koffer 56 dargestellt, der in aufrechter Stellung gegen die Heckwand 10 anliegend gehalten wird. Dazu ist der Gurt 18 in vertikaler Ausrichtung um die in Fahrtrichtung weisende Schmalseite des Koffers 56 herumgelegt, wobei die am freien Ende des Sicherungsgurts 18 befestigte erste Schloßzunge 20 in das Schloßteil 32 in der Nähe der anderen Ecke der Heckwand 10 eingerastet ist. Die zweite Schloßzunge 22 hängt unbenutzt auf dem Sicherungsgurt 18.

In Fig. 2 sind zwei Getränkekisten 58 dargestellt, die ebenfalls gegen die Heckwand 10 anliegend gehalten werden, wobei hier jedoch zuerst die zweite Schloßzunge 22 ergriffen und nach dem Herumlegen des Sicherungsgurts 18 um die in Fahrtrichtung weisenden Seiten der Kisten 58 in dem der Heckwand 10 benachbarten Schloßteil 30 auf der dem Gurtaufroller 16 gegenüberliegenden Seitenwand 8 eingerastet wird. Anschließend wird die erste Schloßzunge 20 ergriffen und über die Kisten 58 hinweg zurück zu dem der Heckwand 10 benachbarten Schloßteil 26 auf der Seite des Gurtaufrollers 16 geführt und dort eingerastet, so daß sowohl Horizontalbewegungen als auch Vertikalbewegungen der Kisten 58 oder ein Umkippen derselben verhindert wird.

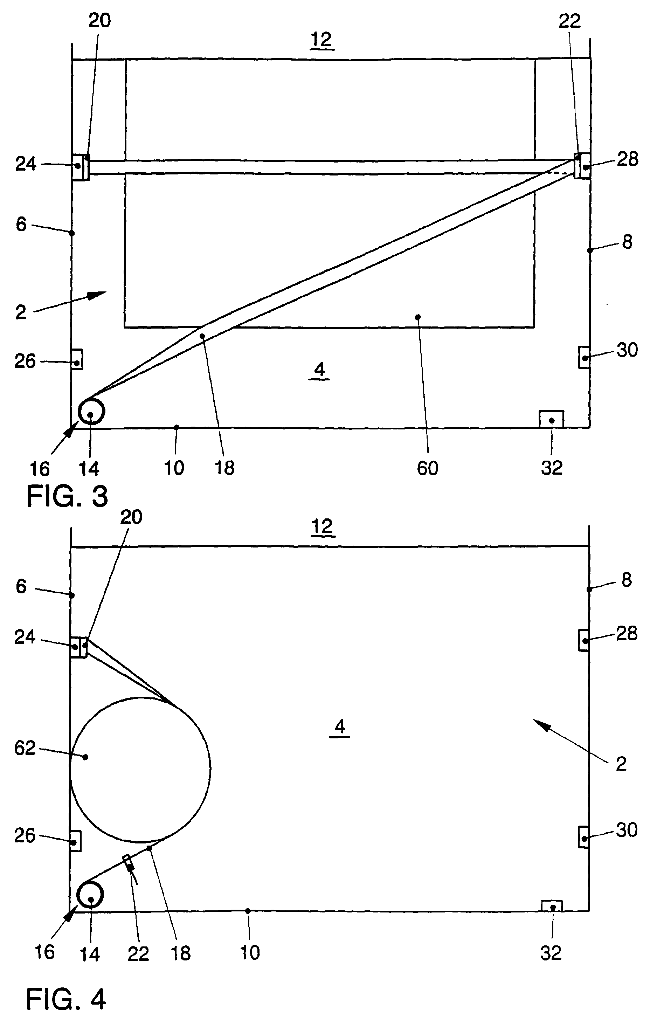

In Fig. 3 sind einige übereinander auf dem Boden des Lade- oder Gepäckraums liegende Bretter 60 mit ihrer in Fahrtrichtung weisenden Vorderkante gegen die Rückseite der Rückenlehne 12 anstoßend mit dem Sicherungsgurt 18 befestigt. Dazu wird wieder zuerst die zweite Schloßzunge 22 ergriffen und in das zur Rückenlehne 12 benachbarte Schloßteil 28 auf der dem Gurtaufroller 16 gegenüberliegenden Seitenwand 8 eingerastet. Dann wird die erste Schloßzunge 20 ergriffen und in das zur Rückenlehne 12 benachbarte Schloßteil 24 auf der Seite des Gurtaufrollers 16 eingerastet. Alternativ kann auch Zuerst die erste Schloßzunge 20 in diesem Schloßteil 24 eingerastet werden, bevor der Gurt 18 mit der zweiten Schloßzunge 22 über die Bretter 60 gezogen und die zweite Schloßzunge 22 im Schloßteil 28 eingerastet wird.

In Fig. 4 ist ein zylindrischer Behälter 62 gegen die Seitenwand 6 auf der Seite des Gurtaufrollers 16 anliegend mit dem Sicherungsgurt 18 befestigt, wobei die erste Schloßzunge 20 in dem zur Rückenlehne 12 benachbarten Schloßteil 24 auf der Seite des Gurtaufrollers 16 eingerastet und die zweite Schloßzunge 22 unbenutzt ist.

Bei dem in Fig. 5 dargestellten Ausführungsbeispiel ist das von der Aufwickelrolle abgewandte Ende 64 des Sicherungsgurts 18 in der Ecke zwischen der Heckwand 10 und der dem Gurtaufroller 16 gegenüberliegenden Seitenwand 8 befestigt, so daß sich der Sicherungsgurt 18 in unbenutztem Zustand an der Heckwand 10 entlang erstreckt, wie in Fig. 5 in unterbrochenen Linien dargestellt. Auf dem Sicherungsgurt 18 sind drei Schloßzungen 66, 68, 70 verschiebbar angebracht, die sich jeweils mit Schloßteilen 52, 54, 72 auf der Rückseite der Rückenlehne 12 bzw. an der Heckwand 10 in Eingriff bringen lassen, um den Gurt 18 zickzackförmig über einen auf dem Boden des Lade- oder Gepäckraums 2 liegenden Gegenstand 74 zu spannen. Wie bei den zuvor beschriebenen Ausführungsbeispielen können auch hier an den Seitenwänden 6, 8 und an der Heckwand 10 weitere Schloßteile vorgesehen sein.

Bei dem in Fig. 6 dargestellten Ausführungsbeispiel ist ein weiterer Sicherungsgurte 18 vorgesehen, der ebenfalls auf der Aufwickelrolle 14 eines Gurtaufroller 16 aufgerollt ist. Die beiden Gurtaufroller 16 sind dort in der Nähe der Heckwand 10 bzw. der Rückenlehne 12 hinter einer Verkleidung (nicht dargestellt) der Seitenwand 6 angeordnet, während vier Schloßteile 76, 78, 80, 82 in den anderen beiden Ecken und in der Mitte der Heckwand 10 und der Rückenlehne 12 angeordnet sind. Die beiden Sicherungsgurte 18 tragen an ihren freien Enden jeweils eine Schloßzunge 20 und können mit einer weiteren, entlang des Gurts 18 verschiebbaren Schloßzunge (nicht dargestellt) versehen sein. Die Gurte 18 sind über Kreuz über einen auf dem Boden 4 liegenden Gegenstand 74 gespannt.

## Patentansprüche

1. Vorrichtung zur Sicherung von Ladegut in einem Laderaum eines Kraftfahrzeugs, mit mindestens einem Sicherungsgurt, der an einem Ende mit einer Aufrollvorrichtung verbunden ist und einen Verriegelungsteil eines Gurtschlosses trägt, der sich nach Herumlegen des Sicherungsgurts um das Ladegut oder einen Teil des Ladeguts mit einem im Abstand von der Aufrollvorrichtung angeordneten Gurtschloß-Schloßteil in Verriegelungseingriff bringen läßt, wobei der Verriegelungsteil an einem freien Ende des Sicherungsgurts befestigt ist, das zu dem mit der Aufrollvorrichtung verbundenen Ende entgegengesetzt ist, dadurch gekennzeichnet, daß sich der Verriegelungsteil (20) unter Abziehen des Sicherungsgurts (18) von der Aufrollvorrichtung (16) zu einem von mehreren, im Abstand voneinander ortsfest im Laderaum angeordneten Schloßteilen (24, 26, 28, 30, 32; 52, 54; 76, 78, 80, 82) bewegen und damit in Verriegelungseingriff bringen läßt.

2. Vorrichtung nach Anspruch 1, dadurch gekennzeichnet, daß der Verriegelungsteil als Schloßzunge (20) ausgebildet ist, und daß der Schloßteil (24, 26, 28, 30, 32; 52, 54; 76, 78, 80, 82) eine Aufnahmeöffnung, einen Rastmechanismus und eine Entriegelungstaste für die Schloßzunge (20) aufweist.

3. Vorrichtung nach Anspruch 1, dadurch gekennzeichnet, daß der Schloßteil als Schloßzunge ausgebildet ist, und daß der Verriegelungsteil eine Aufnahmeöffnung, einen Rastmechanismus und eine Entriegelungstaste für die Schloßzunge aufweist.

4. Vorrichtung nach einem der Ansprüche 1 bis 3, dadurch gekennzeichnet, daß der Sicherungsgurt (18) in unbenutztem Zustand im wesentlichen in gesamter Länge auf der Aufrollvorrichtung (16) aufgerollt ist.

5. Vorrichtung nach einem der Ansprüche 1 bis 4, dadurch gekennzeichnet, daß die Aufrollvorrichtung (18) hinter einer Verkleidung (34) einer Wand (6, 8, 10) des Lade- oder Gepäckraums (2) oder einer den Lade- oder Gepäckraum (2) in Fahrtrichtung begrenzenden Rückenlehne (12) eines Rücksitzes oder einer Rücksitzbank angeordnet ist.

6. Vorrichtung nach einem der Ansprüche 1 bis 4, dadurch gekennzeichnet, daß die Aufrollvorrichtung (18) in einer Ausnehmung angeordnet ist, die in einem Boden (4) oder einer Wand (6, 8, 10) des Lade- oder Gepäckraums (2) oder in einer den Lade- oder Gepäckraum (2) in Fahrtrichtung begrenzenden Rückenlehne (12) eines Rücksitzes oder einer Rücksitzbank vorgesehen ist.

7. Vorrichtung nach Anspruch 5 oder 6, dadurch gekennzeichnet, daß die Verkleidung (34) oder eine Abdeckung der Ausnehmung mit einer Durchtrittsöffnung (40) für den Sicherungsgurt (18) versehen ist.

8. Vorrichtung nach einem der Ansprüche 5 bis 7, dadurch gekennzeichnet, daß die Verkleidung (34) oder eine Abdeckung der Ausnehmung eine um die Durchtrittsöffnung (40) herum eingeformten Griffmulde (36) für den Verriegelungsteil (20) umfaßt.

9. Vorrichtung nach einem der Ansprüche 1 bis 8, dadurch gekennzeichnet, daß die Aufrollvorrichtung (18) eine zu einem Boden (4) des Lade- oder Gepäckraums (2) im wesentlichen senkrechte Drehachse (38) aufweist.

10. Vorrichtung nach einem der Ansprüche 1 bis 9, dadurch gekennzeichnet, daß die Aufrollvorrichtung (16) an einer Heckwand (10) des Lade- oder Gepäckraums (2) angebracht ist, und daß mindestens einer der Schloßteile (32) im Abstand von der Aufrollvorrichtung (18) an der Heckwand (10) angebracht ist.

11. Vorrichtung nach einem der Ansprüche 1 bis 9, dadurch gekennzeichnet, daß die Aufrollvorrichtung an einer den Lade- oder Gepäckraum in Fahrtrichtung begrenzenden Rückenlehne eines Rücksitzes oder einer Rücksitzbank angebracht ist, und daß mindestens einer der Schloßteile im Abstand von der Aufrollvorrichtung an der Rückenlehne angebracht ist.

12. Vorrichtung nach einem der Ansprüche 1 bis 9, dadurch gekennzeichnet, daß die Aufrollvorrichtung an einer Seitenwand des Lade- oder Gepäckraums angebracht ist, und daß mindestens einer der Schloßteile im Abstand von der Aufrollvorrichtung an einer benachbarten Heckwand und/oder an einer den Lade- oder Gepäckraum in Fahrtrichtung begrenzenden Rückenlehne eines Rücksitzes oder einer Rücksitzbank angebracht ist.

13. Vorrichtung nach einem der Ansprüche 10 bis 12, dadurch gekennzeichnet, daß weitere Schloßteile an benachbarten und/oder gegenüberliegenden Wänden des Lade- oder Gepäckraums angebracht sind.

14. Vorrichtung nach einem der Ansprüche 1 bis 9, dadurch gekennzeichnet, daß die Aufrollvorrichtung in einer Ecke des Lade- oder Gepäckraums angeordnet ist.

15. Vorrichtung nach Anspruch 14, dadurch gekennzeichnet, daß mindestens eines der Schloßteile in einer anderen Ecke des Lade- oder Gepäckraums angeordnet ist.

16. Vorrichtung nach einem der Ansprüche 1 bis 15, dadurch gekennzeichnet, daß mindestens zwei im Abstand voneinander angeordnete Aufrollvorrichtungen (16) mit jeweils einem Sicherungsgurt (18) vorgesehen sind.

17. Vorrichtung nach Anspruch 16, dadurch gekennzeichnet, daß die Aufrollvorrichtungen (16) in benachbarten oder gegenüberliegenden Ecken des Lade- oder Gepäckraums (2) angeordnet sind.

18. Vorrichtung nach einem der Ansprüche 1 bis 17, dadurch gekennzeichnet, daß die Schloßteile (24, 26, 28, 30, 32; 52, 54; 76, 78, 80, 82) entlang der Wände (6, 8, 10) des Lade- oder Gepäckraums (2) und/oder einer den Lade- oder Gepäckraum (2) in Fahrtrichtung begrenzenden Rückenlehne (12) eines Rücksitzes oder einer Rücksitzbank verteilt angeordnet sind.

19. Vorrichtung zur Sicherung von Ladegut in einem Laderaum eines Kraftfahrzeugs, mit mindestens einem Sicherungsgurt, der an einem Ende mit einer Aufrollvorrichtung verbunden ist und einen Verriegelungsteil eines Gurtschlosses trägt, der sich nach Herumlegen des Sicherungsgurts um das Ladegut oder einen Teil des Ladeguts mit einem im Abstand von der Aufrollvorrichtung angeordneten Gurtschloß-Schloßteil in Verriegelungseingriff bringen läßt, insbesondere nach einem der vorangehenden Ansprüche, dadurch gekennzeichnet, daß der Sicherungsgurt (18) mindestens zwei Verriegelungsteile (20, 22; 66, 68, 70) trägt, die sich jeweils wahlweise mit einem von mehreren, im Abstand von der Aufrollvorrichtung angeordneten Schloßteilen (24, 26, 28, 30, 32; 52, 54, 72) in Verriegelungseingriff bringen lassen.

20. Vorrichtung nach Anspruch 19, dadurch gekennzeichnet, daß mindestens ein Teil der Verriegelungsteile (22; 66, 68, 70) entlang des Sicherungsgurts (18) verschiebbar ist.

21. Vorrichtung nach Anspruch 20, dadurch gekennzeichnet, daß alle Verriegelungsteile (66, 68, 70) entlang des Sicherungsgurts (18) verschiebbar sind.

22. Vorrichtung nach einem der Ansprüche 19 bis 21, dadurch gekennzeichnet, daß ein von der Aufrollvorrichtung (16) abgewandtes Ende (64) des Sicherungsgurts (18) fest mit einer Wand (6, 8, 10) oder einem Boden (4) des Lade- oder Gepäckraums (2) verbunden ist.

23. Kraftfahrzeug, gekennzeichnet durch eine Vorrichtung nach einem der vorangehenden Ansprüche.
